# EUROPEAN PATENT APPLICATION

(11) **EP 3 629 643 A1**
(43) Date of publication of application: **01.04.2020**
(21) Application number: 17920535.6
(22) Date of filing: 04.08.2017
(51) Int. Cl.: H04W 72/02

(54) **DATA TRANSMISSION METHOD, TERMINAL DEVICE AND NETWORK DEVICE**

(71) Applicant: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN)
(74) Representative: Manitz Finsterwald Patent- und Rechtsanwaltspartnerschaft mbB
(86) International application number: PCT/CN2017/096110
(87) International publication number: WO 2019/024114

(57) **Abstract**

Provided are a data transmission method, a terminal device and a network device. After the network device learns that the terminal device needs to perform a data replication service and/or an sTTI transmission service, logical channel configuration can be carried out accordingly, thereby implementing the rational scheduling of resources. The method comprises: sending status information to a network device, wherein the status information indicates that a terminal device needs to perform a target service, and the target service comprises a data replication service and/or an sTTI transmission service.

## Description

### TECHNICAL FIELD

The disclosure relates to the field of communications, and more particularly to a method for data transmission, a terminal device and a network device.

### BACKGROUND

A vehicle networking system (called Vehicle to Everything (V2X) communication system) is a Sidelink (SL) transmission technology based on Device to Device (D2D) communication. Unlike a related Long Term Evolution (LTE) system in which communication data is received or transmitted through a base station, the vehicle networking system adopts a D2D direct communication, thus the vehicle networking system has higher spectrum efficiency and lower transmission delay.

In a vehicle networking system, duplicated data may be transmitted in a Carrier Aggregation (CA) scenario, and a service may also be transmitted based on a short Transmission Time Interval (TTI). However, whether to perform a data duplication service and an sTTI-based transmission service is determined by a terminal device, and a network device cannot directly acquire, when performing resource scheduling, such information about whether to perform the data duplication service and the sTTI-based transmission service, and thus reasonable resource scheduling cannot be implemented.

### SUMMARY

Embodiments of the disclosure provide a method for data transmission, a terminal device and a network device. The network device may perform, after learning about that the terminal device is to perform at least one of a data duplication service or an sTTI-based transmission service, a configuration of a logical channel, and thus reasonable resource scheduling is implemented.

According to a first aspect, the embodiments of the disclosure provide a method for data transmission, which may include the following operation.

Status information is transmitted to a network device, here, the status information indicates that a terminal device is to perform a target service, and the target service includes at least one of a data duplication service or an sTTI-based transmission service.

Accordingly, in the method for data transmission of the embodiments of the disclosure, the network device may perform, after learning about that the terminal device needs to perform the at least one of the data duplication service or the sTTI-based transmission service, a configuration of a logical channel, and thus reasonable resource scheduling is implemented.

In an implementation mode of the first aspect, the status information may include at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

In an implementation mode of the first aspect, the method may further include the following operation.

Part or all of multiple logical channels are associated with a logical channel group according to priority information of the multiple logical channels and a correspondence between the logical channel group and the priority information, here, the logical channel group is a logical channel group for the target service.

In an implementation mode of the first aspect, before the operation that part or all of the multiple logical channels are associated with the logical channel group according to the priority information of the multiple logical channels and the correspondence between the logical channel group and the priority information, the method may further include the following operation.

Second information transmitted by the network device is received, here, the second information indicates the correspondence between the logical channel group and the priority information.

In an implementation mode of the first aspect, the operation that part or all of the multiple logical channels are associated with the logical channel group according to the priority information of the multiple logical channels and the correspondence between the logical channel group and the priority information may include the following operation.

At least one of the multiple logical channels is associated with the logical channel group according to the priority information of each of the multiple logical channels and the correspondence between the logical channel group and the priority information.

In an implementation mode of the first aspect, after the operation that part or all of the multiple logical channels are associated with the logical channel group, the method may further include the following operation.

A buffer status report is transmitted to the network device, here, the buffer status report carries at least one of: identification information of the logical channel group or destination address index information, here, the destination address index information indicates destination address information for the target service.

Accordingly, in the method for data transmission of the embodiments of the disclosure, the terminal device may report, through the buffer status report, a data volume for the at least one of the data duplication service or sTTI-based transmission service to the network device, and thus the network device may implement reasonable resource scheduling.

In an implementation mode of the first aspect, when the status information includes identification information of a logical channel for the at least one of the data duplication service or the sTTI-based transmission service, the method may further include the following operations.

Third information transmitted by the network device is received, here, the third information indicates a correspondence between the logical channel corresponding to the identification information and a logical channel group, here, the logical channel group is a logical channel group for the target service.

The logical channel corresponding to the identification information is associated with the logical channel group according to the third information.

In an implementation mode of the first aspect, after the operation that the logical channel corresponding to the identification information is associated with the logical channel group, the method may further include the following operation.

A buffer status report is transmitted to the network device, here, the buffer status report carries at least one of: identification information of the logical channel group or destination address index information, here, the destination address index information indicates destination address information for the target service.

In an embodiment, in an implementation mode of the first aspect, the method may be applied to a vehicle networking system.

According to a second aspect, the embodiments of the disclosure provide a method for data transmission, which may include the following operation.

Status information transmitted by a terminal device is received, here, the status information indicates that a terminal device is to perform a target service and the target service includes at least one of a data duplication service or an sTTI-based transmission service.

Accordingly, in the method for data transmission of the embodiments of the disclosure, the network device may accordingly configure, after learning about that the terminal device is to perform the at least one of the data duplication service or the sTTI-based transmission service, a logical channel, thus reasonable resource scheduling is achieved.

In an implementation mode of the second aspect, the status information may include: identification information of a logical channel for the at least one of the data duplication service or the sTTI-based transmission service, priority information of a logical channel for the at least one of the data duplication service or the sTTI-based transmission service, destination address information for the at least one of the data duplication service or the sTTI-based transmission service.

In an implementation mode of the second aspect, the method may further include the following operations.

First information is transmitted to the terminal device according to the status information, here, the first information indicates a correspondence between a logical channel group and priority information, and the logical channel group is a logical channel group for the target service.

A buffer status report transmitted by the terminal device is received, here, the buffer status report carries at least one of: identification information of the logical channel group or destination address index information, here, the destination address index information indicates destination address information for the target service.

A data volume for the target service to be performed by the terminal device is determined according to the buffer status report.

In an implementation mode of the second aspect, when the status information includes identification information of a logical channel for the at least one of the data duplication service or the sTTI-based transmission service, the method may further include the following operations.

Second information is transmitted to the terminal device according to the status information, here, the second information indicates a correspondence between the logical channel corresponding to the identification information and a logical channel group, and the logical channel group is a logical channel group for the target service.

A buffer status report transmitted by the terminal device is received, here, the buffer status report contains at least one of identification information of the logical channel group or the destination address index information, here, the destination address index information indicates the destination address information of the target service.

A data volume for the target service to be performed by the terminal device is determined according to the buffer status report.

Accordingly, in the method for data transmission of the embodiments of the disclosure, the terminal device may report, through the buffer status report, a data volume for the at least one of the data duplication service or sTTI-based transmission service to the network device, and thus the network device may further implement reasonable resource scheduling.

In an implementation mode of the second aspect, the method may be applied to a vehicle networking system.

According to a third aspect, the embodiments of the disclosure provide a method for data transmission, which may include the following operation.

Configuration information is transmitted to a terminal device, here, the configuration information indicates a logical channel or a logical channel group for a target service, the target service includes at least one of a data duplication service or an sTTI-based transmission service and the logical channel group includes at least one logical channel.

Accordingly, in the method for data transmission of the embodiments of the disclosure, a network device may configure, for the terminal device, the logical channel or the logical channel group for the at least one of the data duplication service or the sTTI-based transmission service, and thus reasonable resource scheduling can be implemented.

In an implementation mode of the third aspect, before the operation that the configuration information is transmitted to the terminal device, the method may further include the following operation.

Status information transmitted by the terminal device is received, here, the status information includes at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

In an implementation mode of the third aspect, when the configuration information indicates logical channels for the target service at a granularity of a logical channel group, the configuration information may indicate that the logical channels for the target service comprise all logical channels in the logical channel group.

According to a fourth aspect, the embodiments of the disclosure provide a method for data transmission, which may include the following operations.

Configuration information transmitted by a network device is received, here, the configuration information indicates a logical channel or a logical channel group for a target service, the target service includes at least one of a data duplication service or an sTTI-based transmission service and the logical channel group includes at least one logical channel.

The target service is performed according to the configuration information.

Accordingly, in the method for data transmission of the embodiments of the disclosure, the network device may configure for a terminal device the logical channel or the logical channel group for the at least one of the data duplication service or the sTTI-based transmission service and thus reasonable resource scheduling can be implemented.

In an implementation mode of the fourth aspect, before the operation that the configuration information transmitted by the network device is received, the method may further include the following operation.

Status information is transmitted to the network device, here, the status information includes at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

In an implementation mode of the fourth aspect, when the configuration information indicates logical channels for the target service at a granularity of a logical channel group, the operation that the target service is performed according to the configuration information may include the following operation.

The target service is performed on all logical channels in the logical channel group according to the configuration information.

According to a fifth aspect, the embodiments of the disclosure provide a terminal device, which may include modules or units configured to execute the method in the first aspect or any optional implementation mode of the first aspect.

According to a sixth aspect, the embodiments of the disclosure provide a network device, which may include modules or units configured to execute the method in the second aspect or any optional implementation mode of the second aspect.

According to a seventh aspect, the embodiments of the disclosure provide a network device, which may include modules or units configured to execute the method in the third aspect or any optional implementation mode of the third aspect.

According to an eighth aspect, the embodiments of the disclosure provide a terminal device, which may include modules or units configured to execute the method in the fourth aspect or any optional implementation mode of the fourth aspect.

According to a ninth aspect, there is provided a terminal device, which includes a processor, a memory and a communication interface. The processor is connected with the memory and the communication interface. The memory is configured to store an instruction, the processor is configured to execute the instruction, and the communication interface is configured for communication with another network element under a control of the processor. When the processor executes the instruction stored in the memory, such execution enables the processor to perform the method in the first aspect or any possible implementation mode of the first aspect.

According to a tenth aspect, there is provided a network device, which includes a processor, a memory and a communication interface. The processor is connected with the memory and the communication interface. The memory is configured to store an instruction, the processor is configured to execute the instruction, and the communication interface is configured for communication with another network element under a control of the processor. When the processor executes the instruction stored in the memory, such execution enables the processor to perform the method in the second aspect or any possible implementation mode of the second aspect.

According to an eleventh aspect, there is provided a network device, which includes a processor, a memory and a communication interface. The processor is connected with the memory and the communication interface. The memory is configured to store an instruction, the processor is configured to execute the instruction, and the communication interface is configured for communication with another network element under a control of the processor. When the processor executes the instruction stored in the memory, such execution enables the processor to perform the method in the third aspect or any possible implementation mode of the third aspect.

According to a twelfth aspect, there is provided a terminal device, which includes a processor, a memory and a communication interface. The processor is connected with the memory and the communication interface. The memory is configured to store an instruction, the processor is configured to execute the instruction, and the communication interface is configured for communication with another network element under a control of the processor. When the processor executes the instruction stored in the memory, such execution enables the processor to perform the method in the fourth aspect or any possible implementation mode of the fourth aspect.

According to a thirteenth aspect, there is provided a computer storage medium having stored thereon a program code, the program code is configured to instruct a computer to execute the method in the first aspect or any possible implementation mode of the first aspect.

According to a fourteenth aspect, there is provided a computer storage medium having stored thereon a program code, the program code is configured to instruct a computer to execute the method in the second aspect or any possible implementation mode of the second aspect.

According to a fifteenth aspect, there is provided a computer storage medium having stored thereon a program code, the program code is configured to instruct a computer to execute the method in the third aspect or any possible implementation mode of the third aspect.

According to a sixteenth aspect, there is provided a computer storage medium having stored thereon a program code, the program code is configured to instruct a computer to execute the method in the fourth aspect or any possible implementation mode of the fourth aspect.

According to a seventeenth aspect, there is provided a computer program product including an instruction that, when executed by a computer, causes the computer to execute the method in each aspect.

### BRIEF DESCRIPTION OF DRAWINGS

FIG. 1 is a diagram of an application scenario according to an embodiment of the disclosure.
FIG. 2 is a diagram of data transmission through CA according to an embodiment of the disclosure.
FIG. 3 is a flowchart of a method for data transmission according to an embodiment of the disclosure.
FIG. 4 is a flowchart of another method for data transmission according to an embodiment of the disclosure.
FIG. 5 is a flowchart of yet another method 400 for data transmission according to an embodiment of the disclosure.
FIG. 6 is a flowchart of still another method 400 for data transmission according to an embodiment of the disclosure.
FIG. 7 is a block diagram of a terminal device according to an embodiment of the disclosure.
FIG. 8 is a block diagram of a network device according to an embodiment of the disclosure.
FIG. 9 is a block diagram of another network device according to an embodiment of the disclosure.
FIG. 10 is a block diagram of yet another terminal device according to an embodiment of the disclosure.
FIG. 11 is a block diagram of a device for data transmission according to an embodiment of the disclosure.
FIG. 12 is a structure diagram of a system chip according to an embodiment of the disclosure.

### DETAILED DESCRIPTION

The technical solutions in the embodiments of the disclosure will be clearly and completely described below in combination with the drawings in the embodiments of the disclosure.

The technical solutions of the embodiments of the disclosure may be applied to a vehicle networking system. The vehicle networking system may be based on various communication systems, for example, an LTE-D2D-based vehicle networking system. Unlike a related LTE system in which communication data between terminals is received or transmitted through a network device (for example, a base station), a D2D direct communication is adopted for the vehicle networking system, and thus higher spectral efficiency and a shorter transmission delay are provided.

In an embodiment, a communication system on which the vehicle networking system is based may be a Global System of Mobile communication (GSM), a Code Division Multiple Access (CDMA) system, a Wideband Code Division Multiple Access (WCDMA) system, a General Packet Radio Service (GPRS), an LTE system, an LTE Frequency Division Duplex (FDD) system, LTE Time Division Duplex (TDD), a Universal Mobile Telecommunication System (UMTS), a Worldwide Interoperability for Microwave Access (WiMAX) communication system, a New Radio (NR) or a future 5th-Generation (5G) system and the like.

In the embodiments of the disclosure, a terminal device may be an in-vehicle terminal device, the terminal device may also be a terminal device in a future 5G network or a terminal device in a future evolved Public Land Mobile Network (PLMN) or the like. There are no limits made in the embodiments of the disclosure.

Each embodiment of the disclosure is described in combination with a network device. In the embodiments of the disclosure, the network device may be a device configured to communicate with the terminal device. The network device may be a Base Transceiver Station (BTS) in the GSM or the CDMA, may also be a NodeB (NB) in the WCDMA system, may also be an Evolutional Node B (eNB or eNodeB) in the LTE system, or may further be a wireless controller in a Cloud Radio Access Network (CRAN) scenario. Or the network device may be a relay station, an access point, an in-vehicle device, a wearable device, a network device in the future 5G network, a network device in the future evolved PLMN or the like. There are no limits made in the embodiments of the disclosure.

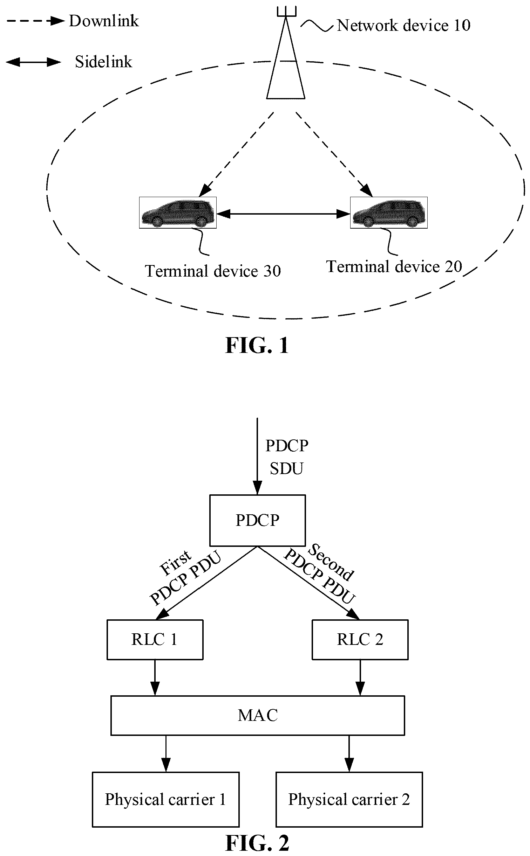

FIG. 1 is a diagram of an application scenario according to an embodiment of the disclosure. A network device and two terminal devices are exemplarily illustrated in FIG. 1. In an embodiment of the disclosure, a wireless communication system may include multiple network devices, and another number of terminal devices may be located in coverage of each network device. There are no limits made thereto in the disclosure. In addition, the wireless communication system may further include another network entity such as a Mobile Management Entity (MME), a Serving Gateway (S-GW) and a Packet data Network Gateway (P-GW) and the like. However, the disclosure is not limited thereto.

The terminal device 20 may communicate with the terminal device 30 in a D2D communication mode. During a D2D communication, the terminal device 20 directly communicates with the terminal device 30 through a D2D link, i.e., an Sidelink (SL). As illustrated in FIG. 1, the terminal device 20 directly communicates with the terminal device 30 through the SL. In FIG. 1, the terminal device 20 communicates with the terminal device 30 through the SL, and a transmission resource for communication is allocated by the network device.

The D2D communication may be Vehicle to Vehicle (V2V) communication or V2X communication. In V2X communication, X may generally be any device with a wireless transmission (i.e., receiving and transmitting) capability, for example, but not limited to, a wireless device moving at a low speed, an in-vehicle device moving at a high speed or a network control node with a wireless transmission capability or the like. The embodiments of the disclosure are mainly applied to a V2X communication scenario, but may also be applied to any other D2D communication scenario. There are no limits made thereto in the embodiments of the disclosure.

In a vehicle networking system, there are two types of terminal devices, i.e., terminal devices with a sensing capability, for example, Vehicle User Equipment (VUE) or Pedestrian User Equipment (PUE), and terminal devices without any sensing capability, for example, PUE. VUE has a higher processing capability, and is usually powered by a storage battery in a vehicle. PUE has a relatively low processing capability, and reduction in power consumption is also a main factor to be considered for PUE. Therefore, in a related vehicle networking system, VUE is considered to have a complete receiving capability and sensing capability, while PUE is considered to have partial or no receiving and sensing capabilities. If the PUE has the partial sensing capability, the PUE can select a resource by a sensing method similar to that for the VUE, and an available resource is selected from resources that can be sensed. If the PUE has no sensing capability, the PUE randomly selects a transmission resource from a resource pool.

In Release-14 of 3rd Generation Partnership Project (3GPP), two transmission modes are defined, that is, a transmission mode 3 (mode 3) and a transmission mode 4 (mode 4). In the transmission mode 3, a transmission resource for a terminal device is allocated by a base station, and the terminal device performs data transmission on an SL according to the resource allocated by the base station; and the base station may allocate to the terminal device a resource for single transmission or may also allocate to the terminal device a resource for semi-persistent transmission. In the transmission mode 4, if a terminal device has a sensing capability, the terminal device performs data transmission in a manner of sensing and reservation; and if a terminal device has no sensing capability, the terminal device randomly selects a transmission resource from a resource pool. The terminal device with the sensing capability acquires an available resource set from the resource pool in a sensing manner, and the terminal device randomly selects, from the resource set, a resource for data transmission. Since a service in the vehicle networking system is periodic, the terminal device usually adopts a semi-persistent transmission manner, that is, the terminal device, after selecting a transmission resource, may keep using the transmission resource in multiple transmission cycles, so that probabilities of resource reselection and resource conflict are reduced. The terminal device may carry, in control information transmitted currently, information about reserving a next transmission resource, such that another terminal device may detect the control information of the terminal device to determine whether the resource is reserved and used by the terminal device to achieve the purpose of reducing resource conflicts.

Since the resource is scheduled by the base station in the transmission mode 3 and the resource pool is configured by the base station or pre-configured in the transmission mode 4, the situation of resource pool overlapping does not exist. That is, the resource pool corresponding to the transmission mode 3 and the resource pool corresponding to the transmission mode 4 are separated or do not overlap each other, a terminal device in the mode 3 performs data transmission on a time-frequency resource in the resource pool supporting the mode 3, and a terminal device in the mode 4 performs data transmission on a time-frequency resource in the resource pool supporting the mode 4.

For a terminal device supporting a 3GPP Release-15 communication protocol, the terminal device also supports two transmission modes, for example, the transmission mode 3 and the transmission mode 4. When a terminal device supporting Release-15 and a terminal device supporting Release-14 perform data transmission together in a communication system, the terminal device with the sensing capability may select a resource by resource sensing, and the terminal device without the sensing capability may inevitably interfere with data transmission of another terminal device. A terminal device in the transmission mode 3 is connected with a base station and a transmission resource for the terminal device is allocated by the base station, so that transmission reliability of the terminal device in the transmission mode 3 is more needed to be protected when the terminal device in the transmission mode 3 and a terminal device in the transmission mode 4 coexist.

In an embodiment, as illustrated in FIG. 2, in a vehicle networking system, a terminal device may transmit, based on a CA manner, the same Packet Data Convergence Protocol (PDCP)-layer data to a network device through two carriers. As illustrated in FIG. 2, a PDCP entity is bound with two Radio Link Control (RLC) entities. The terminal device performs duplication on a first PDCP Protocol Data Unit (PDU) to be transmitted to obtain a second PDCP PDU. The terminal device transmits the first PDCP PDU to one (RLC1) of the two RLC entities and transmits the second PDCP PDU to the other (RLC2) of the two RLC entities. The two RLC entities process the received PDCP PDUs, and transmit the first PDCP PDU and the second PDCP PDU to the network device through two different carriers.

The terminal device may perform, when receiving data transmitted by the network device or another terminal device, an inverse process of the data transmission process illustrated in FIG. 2.

In an embodiment, in a vehicle networking system, a terminal device may transmit a service in an sTTI manner.

In addition, each aspect or characteristic of the disclosure may be implemented into a method, a device or a product with at least one of a standard programming or an engineering technology. Term "product" used in the disclosure covers a computer program which may be accessed from any computer-readable device, carrier or medium. For example, the computer-readable medium may include, but not limited to, a magnetic storage device (for example, a hard disk, a floppy disk or a magnetic tape), an optical disk (for example, a Compact Disk (CD) or a Digital Versatile Disk (DVD) and the like), a smart card and a flash memory (for example, an Erasable Programmable Read-Only Memory (EPROM), a card, a stick or a key driver or the like). In addition, various storage media described in the disclosure may represent one or more devices and/or other machine-readable media configured to store information. Term "machine-readable medium" may include, but not limited to, various media capable of storing, including and/or carrying at least one of instructions or data.

Terms "system" and "network" in the disclosure may usually be exchanged in the disclosure. In the disclosure, term "and/or" is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

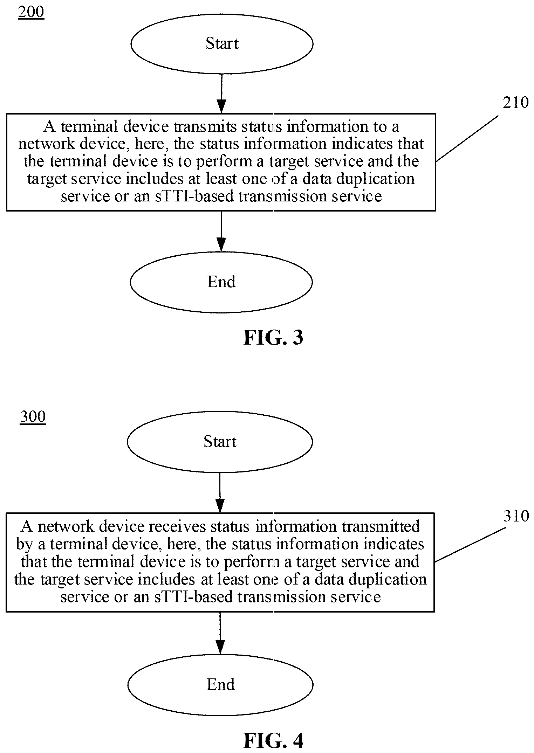

FIG. 3 is a flowchart of a method 200 for data transmission according to an embodiment of the disclosure. As illustrated in FIG. 3, the method 200 may be performed by a terminal device, the terminal device may be the terminal device illustrated in FIG. 1, the terminal device may perform the data transmission illustrated in FIG. 2, a network device in the method 200 may be the network device illustrated in FIG. 1, and the method 200 may be applied to a vehicle networking system. The method 200 includes the following contents.

In 210, status information is transmitted to a network device, here, the status information indicates that a terminal device is to perform a target service, and the target service includes at least one of a data duplication service or an sTTI-based transmission service.

In the embodiment, when the terminal device performs the data duplication service, a frequency diversity gain may be achieved, and data transmission reliability is further improved.

In the embodiment, when the terminal device performs the sTTI-based transmission service, data may be transmitted based on a resource granularity of 0.5ms sTTI, or 0.2ms sTTI or 0.1ms sTTI, and a data transmission delay is further reduced.

In the embodiment, the status information may only occupy a 1-bit resource and may indicate that the terminal device is to perform the target service.

In the embodiment, the status information includes at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

In the embodiment, the priority information may be a value of a ProSe Per-Packet Priority (PPPP).

In the embodiment, the terminal device transmits the status information to the network device through SL User Equipment (UE) information.

In the embodiment, the method 200 further includes the following operation.

The terminal device associates, according to priority information of multiple logical channels for the terminal device and a correspondence between a logical channel group and the priority information, part or all of the multiple logical channels with the logical channel group, here, the logical channel group is a logical channel group for the target service.

In the embodiment, the correspondence between the logical channel group and the priority information may be pre-configured by the network device.

In the embodiment, the terminal device acquires the correspondence between the logical channel group and the priority information from the network device.

In an example, the network device transmits second information to the terminal device according to the status information transmitted by the terminal device.

In the embodiment, the terminal device receives the second information transmitted by the network device, here, the second information indicates the correspondence between the logical channel group and the priority information.

In an example, the network device may transmit, to the terminal device, correspondences between multiple logical channel groups (there are logical channel groups where the target service occurs and logical channel groups where the target service does not occurs) and priority information. In such case, the terminal device may associate, according to a priority attribute of a logical channel for the terminal device, the logical channel with a corresponding logical channel group.

In the embodiment, the terminal device associates, according to the priority information of each of the multiple logical channels and the correspondence between the logical channel group and the priority information, at least one of the multiple logical channels with the logical channel group.

In the embodiment, after the operation that part or all of the multiple logical channels are associated with the logical channel group, the method 200 further includes the following operation.

The terminal device transmits a buffer status report to the network device, here, the buffer status report carries at least one of: identification information of the logical channel group or destination address index information, here, the destination address index information indicates destination address information for the target service.

In the embodiment, the buffer status report includes buffer information of at least one logical channel group.

In the embodiment, the terminal device may directly report the at least one of the identification information of the logical channel group or the destination address index information, and in such case, the terminal device further reports the buffer information of the logical channel group.

In the embodiment, when the status information includes the identification information of the logical channel for the at least one of the data duplication service or the sTTI-based transmission service, the method 200 further includes the following operations.

The terminal device receives third information transmitted by the network device, here, the third information indicates a correspondence between the logical channel corresponding to the identification information and a logical channel group, and the logical channel group is a logical channel group for the target service.

The logical channel corresponding to the identification information is associated with the logical channel group according to the third information.

In the embodiment, after the operation that the logical channel corresponding to the identification information is associated with the logical channel group, the method 200 further includes the following operation.

The terminal device transmits a buffer status report to the network device, here, the buffer status report carries at least one of: identification information of the logical channel group or destination address index information, here, the destination address index information indicates destination address information for the target service.

In the embodiment, the terminal device may also directly report the at least one of: the identification information of the logical channel group or the destination address index information.

Accordingly, in the method for data transmission of the embodiments of the disclosure, the network device may perform, after learning about that the terminal device is to perform the at least one of the data duplication service or the sTTI-based transmission service, a configuration of a logical channel and further implement reasonable resource scheduling.

Furthermore, the terminal device may report, to the network device, a data volume for the at least one of the data duplication service or the sTTI-based transmission service through the buffer status report, and thus the network device may implement reasonable resource scheduling.

FIG. 4 is a flowchart of a method 300 for data transmission according to an embodiment of the disclosure. As illustrated in FIG. 4, the method 300 may be performed by a network device, the network device may be the network device illustrated in FIG. 1, a terminal device in the method 300 may be the terminal device illustrated in FIG. 1, the terminal device may perform the data transmission illustrated in FIG. 2, and the method 300 may be applied to a vehicle networking system. The method 300 includes the following contents.

In 310, a network device receives status information transmitted by a terminal device, here, the status information indicates that a terminal device is to perform a target service, and the target service includes at least one of a data duplication service or an sTTI-based transmission service.

In the embodiment, after the network device learns about that the terminal device is to perform the at least one of the data duplication service or the sTTI-based transmission service, the network device may configure, for the terminal device, a logical channel for the at least one of the data duplication service or the sTTI-based transmission service and may allocate a corresponding grant resource.

In the embodiment, the status information includes: identification information of a logical channel for the at least one of the data duplication service or the sTTI-based transmission service, priority information of a logical channel for the at least one of the data duplication service or the sTTI-based transmission service, destination address information for the at least one of the data duplication service or the sTTI-based transmission service.

In the embodiment, the method 300 further includes the following operation.

The network device transmits first information to the terminal device according to the status information, here, the first information indicates a correspondence between a logical channel group and priority information, and the logical channel group is a logical channel group for the target service.

The network device receives a buffer status report transmitted by the terminal device, here, the buffer status report includes at least one of: identification information of the logical channel group or destination address index information, here, the destination address index information indicates destination address information for the target service.

The network device determines, according to the buffer status report, a data volume for the target service to be performed by the terminal device.

In an embodiment, when the status information includes the identification information of the logical channel for the at least one of the data duplication service or the sTTI-based transmission service, the method 300 further includes the following operations.

The network device transmits second information to the terminal device according to the status information, here, the second information indicates a correspondence between the logical channel corresponding to the identification information and a logical channel group, and the logical channel group is a logical channel group for the target service.

The network device receives a buffer status report transmitted by the terminal device, here, the buffer status report carries at least one of: identification information of the logical channel group or destination address index information, here, the destination address index information indicates destination address information for the target service.

The network device determines, according to the buffer status report, a data volume for the target service to be performed by the terminal device.

The operations in the method 300 for data transmission may refer to descriptions about the corresponding operations in the method 200 for data transmission and, for simplicity, will not be elaborated herein.

Accordingly, in the method for data transmission of the embodiments of the disclosure, the network device may accordingly configure, after learning about that the terminal device is to perform the at least one of the data duplication service or the sTTI-based transmission service, a logical channel and further implement reasonable resource scheduling.

Furthermore, the terminal device may report, to the network device, a data volume for the at least one of the data duplication service or sTTI-based transmission service through the buffer status report, and thus the network device may implement reasonable resource scheduling.

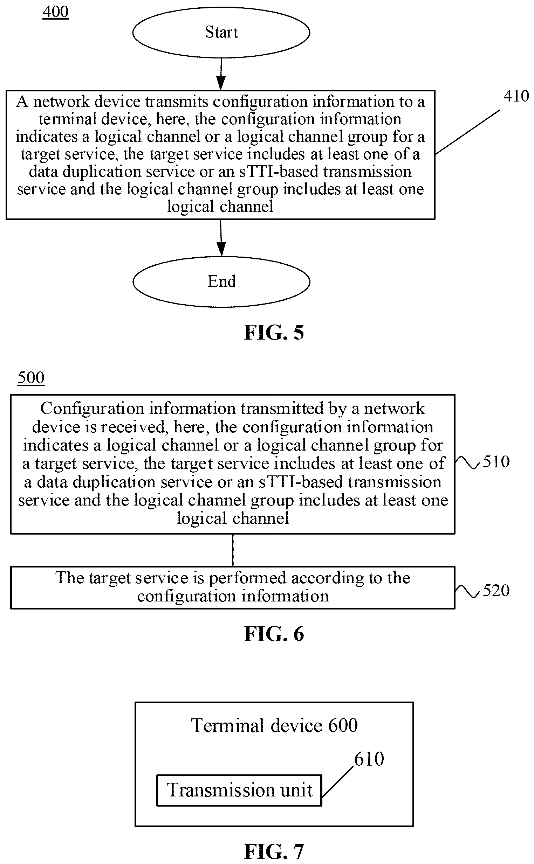

FIG. 5 is a flowchart of a method 400 for data transmission according to an embodiment of the disclosure. As illustrated in FIG. 5, the method 400 may be performed by a network device, the network device may be the network device illustrated in FIG. 1, a terminal device in the method 400 may be the terminal device illustrated in FIG. 1, the terminal device may perform the data transmission illustrated in FIG. 2, and the method 400 may be applied to a vehicle networking system. The method 400 includes the following contents.

In 410, a network device transmits configuration information to a terminal device, here, the configuration information indicates a logical channel or a logical channel group for a target service, the target service includes at least one of a data duplication service or an sTTI-based transmission service, and the logical channel group includes at least one logical channel.

In the embodiment, before the operation that the network device transmits the configuration information to the terminal device, the method 400 further includes the following operation.

The network device receives status information transmitted by the terminal device, here, the status information includes at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

In the embodiment, when the configuration information indicates logical channels for the target service based on a granularity of a logical channel group, the configuration information indicates that the logical channels for the target service comprise all logical channels in the logical channel group.

The operations in the method 400 for data transmission may refer to descriptions about the corresponding operations in the method 200 for data transmission and, for simplicity, will not be elaborated herein.

Accordingly, in the method for data transmission of the embodiments of the disclosure, the network device may configure for the terminal device the logical channel or logical channel group for the at least one of the data duplication service or the sTTI-based transmission service, and may further implement reasonable resource scheduling.

FIG. 6 is a flowchart of a method 500 for data transmission according to an embodiment of the disclosure. As illustrated in FIG. 6, the method 500 may be performed by a terminal device, the terminal device may be the terminal device illustrated in FIG. 1, the terminal device may perform the data transmission illustrated in FIG. 2, a network device in the method 500 may be the network device illustrated in FIG. 1, and the method 500 may be applied to a vehicle networking system. The method 500 includes the following contents.

In 510, configuration information transmitted by a network device is received, here, the configuration information indicates a logical channel or a logical channel group for a target service, the target service includes at least one of a data duplication service or an sTTI-based transmission service, and the logical channel group includes at least one logical channel.

In 520, the target service is performed according to the configuration information.

In the embodiment, before the operation that the terminal device receives the configuration information transmitted by the network device, the method 500 further includes the following operation.

The terminal device transmits status information to the network device, here, the status information includes at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

In the embodiment, when the configuration information indicates logical channels for the target service at a granularity of a logical channel group, the operation that the target service is performed according to the configuration information includes the following operation.

The terminal device performs the target service on all logical channels in the logical channel group according to the configuration information.

The operations in the method 500 for data transmission may refer to descriptions about the corresponding operations in the method 200 for data transmission and, for simplicity, will not be elaborated herein.

Accordingly, in the method for data transmission of the embodiments of the disclosure, the network device may configure, for the terminal device, the logical channel or logical channel group for the at least one of the data duplication service or the sTTI-based transmission service, thus the network device may implement reasonable resource scheduling.

FIG. 7 is a block diagram of a terminal device 600 according to an embodiment of the disclosure. As illustrated in FIG. 7, the terminal device 600 includes a transmission unit 610.

The transmission unit 610 is configured to transmit status information to a network device, here, the status information indicates that the terminal device is to perform a target service and the target service includes at least one of a data duplication service or an sTTI-based transmission service.

In the embodiment, the status information includes at least one of: identification information of a logical channel for the at least one of the data duplication service or the sTTI-based transmission service, priority information of the logical channel for the at least one of the data duplication service or the sTTI-based transmission service, or destination address information for the at least one of the data duplication service or the sTTI-based transmission service.

In the embodiment, the terminal device 600 further includes a processing unit 620.

The processing unit 620 is configured to associate, according to priority information of multiple logical channels and a correspondence between a logical channel group and the priority information, part or all of the multiple logical channels with the logical channel group, here, the logical channel group is a logical channel group for the target service.

In the embodiment, before the processing unit 620 associates, according to the priority information of the multiple logical channels and the correspondence between the logical channel group and the priority information, part or all of the multiple logical channels with the logical channel group, the terminal device 600 further includes a receiving unit 630.

The receiving unit 630 is configured to receive second information transmitted by the network device, here, the second information indicates the correspondence between the logical channel group and the priority information.

In the embodiment, the processing unit 620 is configured to associate, according to the priority information of each of the multiple logical channels and the correspondence between the logical channel group and the priority information, at least one of the multiple logical channels with the logical channel group.

In the embodiment, after the processing unit 620 associates part or all of the multiple logical channels with the logical channel group, the transmission unit 610 is further configured to transmit a buffer status report to the network device, here, the buffer status report carries at least one of: identification information of the logical channel group or destination address index information, here, the destination address index information indicates destination address information for the target service.

In the embodiment, when the status information includes the identification information of the logical channel for the at least one of the data duplication service or the sTTI-based transmission service, the terminal device further includes the receiving unit 630 and the processing unit 620.

The receiving unit 630 is configured to receive third information transmitted by the network device, here, the third information indicates a correspondence between the logical channel corresponding to the identification information and a logical channel group, and the logical channel group is a logical channel group for the target service.

The processing unit 620 is configured to associate, according to the third information, the logical channel corresponding to the identification information with the logical channel group.

In the embodiment, after the processing unit 620 associates the logical channel corresponding to the identification information with the logical channel group, the transmission unit 610 is further configured to transmit a buffer status report to the network device, here, the buffer status report carries at least one of: identification information of the logical channel group or destination address index information, here, the destination address index information indicates destination address information for the target service.

In an embodiment, the terminal device 600 is applied to a vehicle networking system.

The abovementioned and other operations and/or functions of each module in the terminal device 600 according to the embodiment of the disclosure are adopted to implement the corresponding flows performed by the terminal device in the method 200 in FIG. 3 and, for simplicity, will not be elaborated herein.

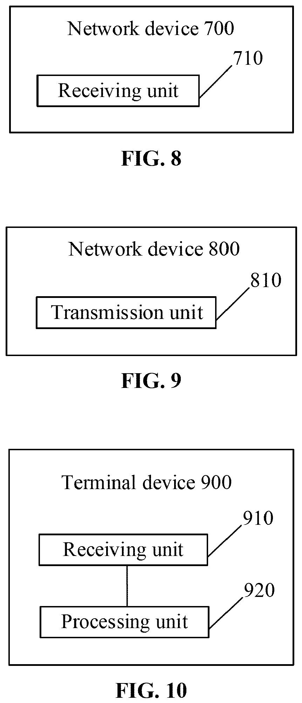

FIG. 8 is a block diagram of a network device 700 according to an embodiment of the disclosure. As illustrated in FIG. 8, the network device 700 includes a receiving unit 710.

The receiving unit 710 is configured to receive status information transmitted by a terminal device, here, the status information indicates that a terminal device is to perform a target service and the target service includes at least one of a data duplication service or an sTTI-based transmission service.

In the embodiment, the status information includes: identification information of a logical channel for the at least one of the data duplication service or the sTTI-based transmission service, priority information of a logical channel for the at least one of the data duplication service or the sTTI-based transmission service, destination address information for the at least one of the data duplication service or the sTTI-based transmission service.

In the embodiment, the network device 700 further includes a transmission unit 720 and a processing unit 730.

The transmission unit 720 is configured to transmit first information to the terminal device according to the status information, here, the first information indicates a correspondence between a logical channel group and priority information, and the logical channel group is a logical channel group required to implement the target service.

The receiving unit 710 is further configured to receive a buffer status report transmitted by the terminal device, here, the buffer status report carries at least one of: identification information of the logical channel group or destination address index information, here, the destination address index information indicates destination address information for the target service.

The processing unit 730 is configured to determine, according to the buffer status report, a data volume for the target service to be performed by the terminal device.

In the embodiment, when the status information includes the identification information of the logical channel for the at least one of the data duplication service or the sTTI-based transmission service, the network device 700 further includes the transmission unit 720, the receiving unit 710 and the processing unit 730.

The transmission unit 720 is configured to transmit second information to the terminal device according to the status information, here, the second information indicates a correspondence between the logical channel corresponding to the identification information and a logical channel group, and the logical channel group is a logical channel group for the target service.

The receiving unit 710 is further configured to receive a buffer status report transmitted by the terminal device, here, the buffer status report carries at least one of: identification information of the logical channel group or destination address index information, here, the destination address index information indicates destination address information for the target service.

The processing unit 730 is configured to determine, according to the buffer status report, a data volume for the target service to be performed by the terminal device.

In the embodiment, the network device 700 is applied to a vehicle networking system.

The abovementioned and other operations and/or functions of each module in the network device 700 according to the embodiment of the disclosure are adopted to implement the corresponding flows performed by the network device in the method 300 in FIG. 4 and, for simplicity, will not be elaborated herein.

FIG. 9 is a block diagram of a network device 800 according to an embodiment of the disclosure. As illustrated in FIG. 9, the network device 800 includes a transmission unit 810.

The transmission unit 810 is configured to transmit configuration information to a terminal device, here, the configuration information indicates a logical channel or a logical channel group for a target service, the target service includes at least one of a data duplication service or an sTTI-based transmission service, and the logical channel group includes at least one logical channel.

In the embodiment, before the transmission unit 810 transmits the configuration information to the terminal device, the network device 800 further includes a receiving unit 820.

The receiving unit 820 is configured to receive status information transmitted by the terminal device, here, the status information includes at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

In the embodiment, when the configuration information indicates the logical channel group for the target service, the configuration information indicates that logical channels for the target service comprise all logical channels in the logical channel group.

The abovementioned and other operations and/or functions of each module in the network device 800 according to the embodiment of the disclosure are adopted to implement the corresponding flows executed by the network device in the method 400 in FIG. 5 and, for simplicity, will not be elaborated herein.

FIG. 10 is a block diagram of a terminal device 900 according to an embodiment of the disclosure. As illustrated in FIG. 10, the terminal device 900 includes a receiving unit 910 and a processing unit 920.

The receiving unit 910 is configured to receive configuration information transmitted by a network device, here, the configuration information indicates a logical channel or a logical channel group for a target service, the target service includes at least one of a data duplication service or an sTTI-based transmission service and the logical channel group includes at least one logical channel.

The processing unit 920 is configured to perform the target service according to the configuration information.

In the embodiment, before the receiving unit 910 receives the configuration information transmitted by the network device, the terminal device 900 further includes a transmission unit 930.

The transmission unit 930 is configured to transmit status information to the network device, here, the status information includes at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

In the embodiment, when the configuration information indicates the logical channel group for the target service, the processing unit 920 is configured to perform the target service on all logical channels in the logical channel group according to the configuration information.

The abovementioned and other operations and/or functions of each module in the terminal device 900 according to the embodiment of the disclosure are adopted to implement the corresponding flows executed by the terminal device in the method 500 in FIG. 6 and, for simplicity, will not be elaborated herein.

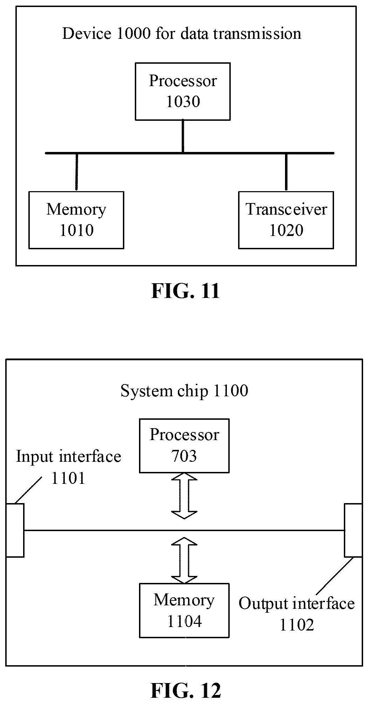

FIG. 11 is a block diagram of a device 1000 for data transmission according to an embodiment of the disclosure. The device 1000 includes a memory 1010, a transceiver 1020 and a processor 1030.

The memory 1010 is configured to store a program, here, the program includes a code.

The transceiver 1020 is configured to communicate with another device.

The processor 1030 is configured to execute a program code in the memory 1010.

In the embodiment, when the code is executed, the processor 1030 may implement each operation performed by a terminal device in the method 200 in FIG. 3. For simplicity, no more elaborations will be made herein. In such case, the device 1000 may be a terminal device, for example, a VUE.

In the embodiment, when the code is executed, the processor 1030 may implement each operation performed by a network device in the method 300 in FIG. 4. For simplicity, no more elaborations will be made herein. In such case, the device 1000 may be an access network device or may also be a core network device. The transceiver 1020 is configured to perform specific signal transmission and reception under driving of the processor 1030.

In the embodiment, when the code is executed, the processor 1030 may implement each operation performed by a network device in the method 400 in FIG. 5. For simplicity, no more elaborations will be made herein. In such case, the device 1000 may be an access network device or may also be a core network device. The transceiver 1020 is configured to perform specific signal transmission and reception under driving of the processor 1030.

In the embodiment, when the code is executed, the processor 1030 may further implement each operation performed by a terminal device in the method 500 in FIG. 6. For simplicity, no more elaborations will be made herein. In such case, the device 1000 may be a terminal device, for example, a VUE.

In the embodiment of the disclosure, the processor 1030 may be a Central Processing Unit (CPU) and the processor 1030 may also be another universal processor, a Digital Signal Processor (DSP), an Application Specific Integrated Circuit (ASIC), an Field-Programmable Gate Array (FPGA) or another programmable logic device, discrete gate or transistor logic device, and discrete hardware component and the like. The universal processor may be a microprocessor or the processor may also be any conventional processor and the like.

The memory 1010 may include a Read-Only Memory (ROM) and a Random Access Memory (RAM) and provides an instruction and data for the processor 1030. A part of the memory 1010 may further include a nonvolatile RAM. For example, the memory 1010 may further store information of a device type.

The transceiver 1020 may be configured to realize signal transmitting and receiving functions, for example, frequency modulation and demodulation functions or up-conversion and down-conversion functions.

In an implementation process, at least one operation of the method may be completed through an integrated logical circuit of hardware in the processor 1030, or the integrated logical circuit may complete the at least one operation under driving of an instruction in a software form. Therefore, the device 1000 for data transmission may be a chip or a chip set. The operations of the methods disclosed in combination with the embodiments of the disclosure may be directly embodied to be executed and completed by a hardware processor or executed and completed by a combination of hardware and software modules in the processor. The software module may be located in a mature storage medium in this field, such as a RAM, a flash memory, a ROM, a Programmable ROM (PROM) or Electrically Erasable PROM (EEPROM) and a register and the like. The storage medium is located in the memory, and the processor 1030 reads information in the memory, and completes the operations of the methods in combination with hardware. No more detailed descriptions will be made herein to avoid repetitions.

FIG. 12 is a structure diagram of a system chip 1100 according to an embodiment of the disclosure. The system chip 1100 of FIG. 12 includes an input interface 1101, output interface 1102, processor 1103 and memory 1104 which may be connected through an internal communication connection line. The processor 1103 is configured to execute a code in the memory 1104.

In the embodiment, when the code is executed, the processor 1103 implements methods performed by a terminal device in the method embodiments. For simplicity, no more elaborations will be made herein.

In the embodiment, when the code is executed, the processor 1103 implements methods performed by a network device in the method embodiments. For simplicity, no more elaborations will be made herein.

The embodiments may be implemented completely or partially through software, hardware, firmware or any combination thereof. During implementation with the software, the embodiments may be implemented completely or partially in form of computer program product. The computer program product includes one or more computer instructions. When the computer program instruction is loaded and executed on a computer, the flows or functions according to the embodiments of the disclosure are completely or partially generated. The computer may be a universal computer, a dedicated computer, a computer network or another programmable device. The computer instruction may be stored in a computer-readable storage medium or transmitted from a computer-readable storage medium to another computer-readable storage medium. For example, the computer instruction may be transmitted from a website, computer, server or data center to another website, computer, server or data center in a wired (for example, coaxial cable, optical fiber and Digital Subscriber Line (DSL)) or wireless (for example, infrared, radio and microwave and the like) manner. The computer-readable storage medium may be any available medium accessible for the computer, or may be a data storage device, such as a server and a data center which include one or more integrated available media. The available medium may be a magnetic medium (for example, a floppy disk, a hard disk and a magnetic tape), an optical medium (for example, a DVD), a semiconductor medium (for example, a Solid State Disk (SSD)) or the like.

In various embodiments of the disclosure, a magnitude of a sequence number of each process does not mean an execution sequence. The execution sequence of each process should be determined by the function and an internal logic of the process and should not form any limit to an implementation process of the embodiments of the disclosure.

Those skilled in the art may clearly learn about that specific working process of the system, device and unit described above may refer to the corresponding processes in the method embodiments and will not be elaborated herein for convenient and brief description.

The above is only the specific implementation modes of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for data transmission, comprising:
transmitting status information to a network device, wherein the status information indicates that a terminal device is to perform a target service and the target service comprises at least one of a data duplication service or a short Transmission Time Interval (sTTI)-based transmission service.

2. The method of claim 1, wherein the status information comprises at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

3. The method of claim 1 or 2, further comprising:
associating, according to priority information of multiple logical channels and a correspondence between a logical channel group and the priority information, part or all of the multiple logical channels with the logical channel group, wherein the logical channel group is a logical channel group for the target service.

4. The method of claim 3, further comprising:
before associating part or all of the multiple logical channels with the logical channel group according to the priority information of the multiple logical channels and the correspondence between the logical channel group and the priority information, receiving second information transmitted by the network device, wherein the second information indicates the correspondence between the logical channel group and the priority information.

5. The method of claim 3 or 4, wherein associating part or all of the multiple logical channels with the logical channel group according to the priority information of the multiple logical channels and the correspondence between the logical channel group and the priority information comprises:
associating, according to the priority information of each of the multiple logical channels and the correspondence between the logical channel group and the priority information, at least one of the multiple logical channels with the logical channel group.

6. The method of any one of claims 3-5, further comprising:
after associating part or all of the multiple logical channels with the logical channel group, transmitting a buffer status report to the network device, wherein the buffer status report carries at least one of: identification information of the logical channel group or destination address index information, wherein the destination address index information indicates destination address information for the target service.

7. The method of claim 1 or 2, further comprising: when the status information comprises identification information of a logical channel for the at least one of the data duplication service or the sTTI-based transmission service,
receiving third information transmitted by the network device, wherein the third information indicates a correspondence between the logical channel corresponding to the identification information and a logical channel group, wherein the logical channel group is a logical channel group for the target service; and
associating, according to the third information, the logical channel corresponding to the identification information with the logical channel group.

8. The method of claim 7, further comprising:
after associating the logical channel corresponding to the identification information with the logical channel group, transmitting a buffer status report to the network device, wherein the buffer status report carries at least one of: identification information of the logical channel group or destination address index information, wherein the destination address index information indicates destination address information for the target service.

9. The method of any one of claims 1-8, wherein the method is applied to a vehicle networking system.

10. A method for data transmission, comprising:
receiving status information transmitted by a terminal device, wherein the status information indicates that a terminal device is to perform a target service and the target service comprises at least one of a data duplication service or a short Transmission Time Interval (sTTI)-based transmission service.

11. The method of claim 10, wherein the status information comprises: identification information of a logical channel for the at least one of the data duplication service or the sTTI-based transmission service, priority information of a logical channel for the at least one of the data duplication service or the sTTI-based transmission service, destination address information for the at least one of the data duplication service or the sTTI-based transmission service.

12. The method of claim 10 or 11, further comprising:
transmitting first information to the terminal device according to the status information, wherein the first information indicates a correspondence between a logical channel group and priority information and the logical channel group is a logical channel group for the target service;
receiving a buffer status report transmitted by the terminal device, wherein the buffer status report carries at least one of: identification information of the logical channel group or destination address index information, wherein the destination address index information indicates destination address information for the target service; and
determining, according to the buffer status report, a data volume for the target service to be performed by the terminal device.

13. The method of claim 10 or 11, further comprising: when the status information comprises identification information of a logical channel for the at least one of the data duplication service or the sTTI-based transmission service,
transmitting second information to the terminal device according to the status information, wherein the second information indicates a correspondence between the logical channel corresponding to the identification information and a logical channel group, wherein the logical channel group is a logical channel group for the target service;
receiving a buffer status report transmitted by the terminal device, wherein the buffer status report carries at least one of: identification information of the logical channel group or destination address index information, wherein the destination address index information indicates destination address information for the target service; and
determining, according to the buffer status report, a data volume for the target service to be performed by the terminal device.

14. The method of any one of claims 10-13, wherein the method is applied to a vehicle networking system.

15. A method for data transmission, comprising:
transmitting configuration information to a terminal device, wherein the configuration information indicates a logical channel or a logical channel group for a target service, the target service comprises at least one of a data duplication service or a short Transmission Time Interval (sTTI)-based transmission service and the logical channel group comprises at least one logical channel.

16. The method of claim 15, further comprising:
before transmitting the configuration information to the terminal device, receiving status information transmitted by the terminal device, wherein the status information comprises at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

17. The method of claim 15 or 16, wherein when the configuration information indicates logical channels for the target service at a granularity of a logical channel group, the configuration information indicates that the logical channels for the target service comprise all logical channels in the logical channel group.

18. A method for data transmission, comprising:
receiving configuration information transmitted by a network device, wherein the configuration information indicates a logical channel or a logical channel group for a target service, the target service comprises at least one of a data duplication service or a short Transmission Time Interval (sTTI)-based transmission service and the logical channel group comprises at least one logical channel; and
performing the target service according to the configuration information.

19. The method of claim 18, further comprising:
before receiving the configuration information transmitted by the network device, transmitting status information to the network device, wherein the status information comprises at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

20. The method of claim 18 or 19, wherein when the configuration information indicates logical channels for the target service at a granularity of a logical channel group, performing the target service according to the configuration information comprises:
performing the target service on all logical channels in the logical channel group according to the configuration information.

21. A terminal device, comprising:
a transmission unit, configured to transmit status information to a network device, wherein the status information indicates that the terminal device is to perform a target service and the target service comprises at least one of a data duplication service or a short Transmission Time Interval (sTTI)-based transmission service.

22. The terminal device of claim 21, wherein the status information comprises at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

23. The terminal device of claim 21 or 22, further comprising:
a processing unit, configured to associate, according to priority information of multiple logical channels and a correspondence between a logical channel group and the priority information, part or all of the multiple logical channels with the logical channel group, wherein the logical channel group is a logical channel group for the target service.

24. The terminal device of claim 23, further comprising a receiving unit, wherein
before the processing unit associates part or all of the multiple logical channels with the logical channel group according to the priority information of the multiple logical channels and the correspondence between the logical channel group and the priority information,
the receiving unit is configured to receive second information transmitted by the network device, wherein the second information indicates the correspondence between the logical channel group and the priority information.

25. The terminal device of claim 23 or 24, wherein the processing unit is configured to associate, according to the priority information of each of the multiple logical channels and the correspondence between the logical channel group and the priority information, at least one of the multiple logical channels with the logical channel group.

26. The terminal device of any one of claims 23-25, wherein after the processing unit associates part or all of the multiple logical channels with the logical channel group, the transmission unit is further configured to transmit a buffer status report to the network device, wherein the buffer status report carries at least one of: identification information of the logical channel group or destination address index information, wherein the destination address index information indicates destination address information for the target service.

27. The terminal device of claim 21 or 22, further comprising a receiving unit and a processing unit, wherein
when the status information comprises identification information of a logical channel for the at least one of the data duplication service or the sTTI-based transmission service,
the receiving unit is configured to receive third information transmitted by the network device, wherein the third information indicates a correspondence between the logical channel corresponding to the identification information and a logical channel group, wherein the logical channel group is a logical channel group for the target service; and
the processing unit is configured to associate, according to the third information, the logical channel corresponding to the identification information with the logical channel group.

28. The terminal device of claim 27, wherein after the processing unit associates the logical channel corresponding to the identification information with the logical channel group, the transmission unit is further configured to transmit a buffer status report to the network device, wherein the buffer status report carries at least one of: identification information of the logical channel group or destination address index information, wherein the destination address index information indicates destination address information for the target service.

29. The terminal device of any one of claims 21-28, wherein the terminal device is applied to a vehicle networking system.

30. A network device, comprising:
a receiving unit, configured to receive status information transmitted by a terminal device, wherein the status information indicates that a terminal device is to perform a target service and the target service comprises at least one of a data duplication service or a short Transmission Time Interval (sTTI)-based transmission service.

31. The network device of claim 30, wherein the status information comprises: identification information of a logical channel for the at least one of the data duplication service or the sTTI-based transmission service, priority information of a logical channel for the at least one of the data duplication service or the sTTI-based transmission service, destination address information for the at least one of the data duplication service or the sTTI-based transmission service.

32. The network device of claim 30 or 31, further comprising a transmission unit and a processing unit, wherein
the transmission unit is configured to transmit first information to the terminal device according to the status information, wherein the first information indicates a correspondence between a logical channel group and priority information and the logical channel group is a logical channel group for the target service;
the receiving unit is further configured to receive a buffer status report transmitted by the terminal device, wherein the buffer status report carries at least one of: identification information of the logical channel group or destination address index information, wherein the destination address index information indicates destination address information for the target service; and
the processing unit is configured to determine, according to the buffer status report, a data volume for the target service to be performed by the terminal device.

33. The network device of claim 30 or 31, further comprising a transmission unit and a processing unit, wherein
when the status information comprises identification information of a logical channel for the at least one of the data duplication service or the sTTI-based transmission service,
the transmission unit is configured to transmit second information to the terminal device according to the status information, wherein the second information indicates a correspondence between the logical channel corresponding to the identification information and a logical channel group, wherein the logical channel group is a logical channel group for the target service;
the receiving unit is further configured to receive a buffer status report transmitted by the terminal device, wherein the buffer status report carries at least one of: identification information of the logical channel group or destination address index information, wherein the destination address index information indicates destination address information for the target service; and
the processing unit is configured to determine, according to the buffer status report, a data volume for the target service to be performed by the terminal device.

34. The network device of any one of claims 30-33, wherein the network device is applied to a vehicle networking system.

35. A network device, comprising:
a transmission unit, configured to transmit configuration information to a terminal device, wherein the configuration information indicates a logical channel or a logical channel group for a target service, the target service comprises at least one of a data duplication service or a short Transmission Time Interval (sTTI)-based transmission service and the logical channel group comprises at least one logical channel.

36. The network device of claim 35, further comprising a receiving unit, wherein
before the transmission unit transmits the configuration information to the terminal device,
the receiving unit is configured to receive status information transmitted by the terminal device, wherein the status information comprises at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

37. The network device of claim 35 or 36, wherein when the configuration information indicates logical channels for the target service at a granularity of a logical channel group, the configuration information indicates that the logical channels for the target service comprise all logical channels in the logical channel group.

38. A terminal device, comprising:
a receiving unit, configured to receive configuration information transmitted by a network device, wherein the configuration information indicates a logical channel or a logical channel group for a target service, the target service comprises at least one of a data duplication service or a short Transmission Time Interval (sTTI)-based transmission service and the logical channel group comprises at least one logical channel; and
a processing unit, configured to perform the target service according to the configuration information.

39. The terminal device of claim 38, further comprising a transmission unit, wherein
before the receiving unit receives the configuration information transmitted by the network device,
the transmission unit is configured to transmit status information to the network device, wherein the status information comprises at least one of: identification information of a logical channel for the at least one of the data duplication service or the sTTI-based transmission service, priority information of a logical channel for the at least one of the data duplication service or the sTTI-based transmission service, or destination address information for the at least one of the data duplication service or the sTTI-based transmission service.

40. The terminal device of claim 38 or 39, wherein when the configuration information indicates logical channels for the target service at a granularity of a logical channel group, the processing unit is configured to:
perform the target service on all logical channels in the logical channel group according to the configuration information.
